# EUROPÄISCHE PATENTSCHRIFT

(11) **EP 2 495 087 B1**
(45) Veröffentlichungstag und Bekanntmachung des Hinweises auf die Patenterteilung: **07.01.2015**
(21) Anmeldenummer: 12157956.9
(22) Anmeldetag: 02.03.2012
(51) Int. Cl.: B29C 49/46, B29C 49/56

(54) **Blasmaschine mit Reinraum und sterilisierbar verbundenen Bauteilen**
Blow moulding machine with clean room and sterilisable connected components
Souffleuse dotée d'une salle stérile et de composants reliés et stérilisables

(30) Priorität: 04.03.2011 DE 102011013125
(43) Veröffentlichungstag der Anmeldung: 05.09.2012
(73) Patentinhaber: Krones AG, 93073 Neutraubling (DE)
(72) Erfinder: Voth, Klaus, 93083 Obertraubling (DE); Geltinger, Florian, 93093 Donaustauf (DE); Neubauer, Michael, 83236 Übersee (DE); Söllner, Jürgen, 93176 Beratzhausen (DE); Hausladen, Josef, 93086 Wörth a. d. Donau (DE); Handschuh, Eduard, 93093 Donaustauf (DE)
(74) Vertreter: Bittner, Bernhard

(56) Entgegenhaltungen:
- WO-A2-2010/020529
- FR-A1- 2 813 231
- US-A- 6 099 286

## Beschreibung

Die vorliegende Erfindung bezieht sich auf eine Vorrichtung zum Behandeln von Behältnissen. Die Erfindung wird unter Bezugnahme auf eine Blasmaschine erörtert, welche Kunststoffvorformlinge zu Kunststoffbehältnissen umformt. Es ist jedoch denkbar, die vorliegend Erfindung auch auf andere Maschinen zum Behandeln von Behältnissen, wie beispielsweise Sterilisationsenlagen, anzuwenden.

Derartige Blasmaschinen sind aus dem Stand der Technik seit langem bekannt. Dabei sind insbesondere auch sogenannte aseptische Blasmaschinen bekannt, welche zur Expansion von Kunststoffvorformlingen zu Kunststoffbehältnissen unter sterilen Bedingungen dienen. Derartige sterile bzw. aseptische Blasmaschinen werden beispielsweise In der WO 2010 020 529 A2 beschrieben. Eine besondere Herausforderung bei derartigen Blasmaschinen besteht darin, die entsprechende hohe Reinheit zu erreichen. So werden beispielsweise in den USA derartige Richtlinien seitens der FDA (Food and Drug Administration) aufgestellt und überwacht. Dabei ist es insbesondere denkbar, dass in der Maschine verbleibende Keime zu einer Kontamination der Maschine und auch der Behälter führen. Das Problem tritt insbesondere bei solchen Bauteilen auf, die miteinander verbundene Elemente aufweisen, wobei zwischen diesen Elementen Spalte entstehen, welche nur schwer zu reinigen sind.

Der vorliegenden Erfindung liegt daher die Aufgabe zugrunde eine Blasmaschine zur Verfügung zu stellen, welche im Vergleich zum Stand der Technik leichter zu reinigen ist bzw. unter sterilen Bedingungen gehalten werden kann.

Dies wird erfindungsgemäß durch eine Vorrichtung nach Anspruch 1 erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Umformungsstationen auf, welche an einem beweglichen Träger angeordnet sind, wobei die Umformungsstationen jeweils Blasformen aufweisen, innerhalb derer die Kunststoffvorformlinge durch Beaufschlagung mit einem fließfähigen Medium zu Kunststoffbehältnissen umformbar sind. Daneben weisen die Umformungsstationen auch Blasformträger zum Halten dieser Blasformen auf und die Blastormträger weisen wenigstens zwei zueinander bewegliche Blasformträgerteile zum Öffnen und Schließen der Blasformen auf. Weiterhin weist die Vorrichtung einen gegenüber einer Umgebung mittels wenigstens einer Wandung abgegrenzten Reinraum auf, der die einzelnen Umformungsstationen wenigstens teilweise umgibt, sodass die Umformungsstationen innerhalb dieses Reinraums bewegbar sind. Daneben ist wenigstens eine Beaufschlagungseinrichtung vorgesehen, um wenigstens einen Bereich der innerhalb des Reinraums bewegbaren Umformungsstationen mit einem fließfähigen Sterilisationsmittel zu beaufschlagen.

Erfindungsgemäß weist wenigstens eine Umformungsstation wenigstens zwei in einem Arbeitsbetrieb permanent aneinander befestigte Bauteile auf, und zwischen diesen Bauteilen ist eine elastische Dichtungseinrichtung angeordnet, wobei diese Dichtungseinrichtung einen zwischen diesen Bauteilen gebildeten Spalt derart ausfüllt und/oder schließt (bzw. bedeckt), dass die Dichtungseinrichtung unmittelbar von dem Sterilisationsmittel beaufschlagbar ist.

Die Dichtungseinrichtung kann dabei bevorzugt den Spalt schließen, in dem sie diesen ausfüllt bzw. bedeckt.

Bei aus dem Stand der Technik bekannten Vorrichtungen können bei derart aneinander befestigten Bauteilen Spalte gebildet werden, wobei sich in diesen Spalten Keime befinden können, die durch die enge Geometrie im Spalt bei Sterilisation der Maschine z.B. durch gasförmiges H2O2 vor Abtötung geschützt wären. Die Erfindung schlägt daher eine Möglichkeit vor, Bauteile, insbesondere in einem Isolator, hygienisch zu verbinden, was insbesondere auch im Hinblick auf die Konstruktion einer aseptischen Blasmaschine von Vorteil ist. Die Dichtungseinrichtung wird dabei derart ausgeführt, dass sie selbst unmittelbar von dem Sterilisationsmittel beaufschlagbar ist und entsprechend in dem gebildeten Spalt keine Keime an von dem Sterilisationsmittel unerreichbaren Oberflächen gebildet werden.

Vorteilhaft bildet also die Dichtungseinrichtung einen Teil der Oberfläche, welche insbesondere von dem ersten Bauteil in das zweite Bauteil übergeht. Die Dichtung kann damit vorteilhaft an einem Außenumfang der Oberfläche, welche von dem ersten Bauteil in das zweite Bauteil übergeht, gebildet sein.

Bei der Beaufschlagungseinrichtung kann es sich beispielsweise um eine Düse oder einen Sprühkopf handeln, der die Bauteile der Blasmaschine und insbesondere der einzelnen Umformungsstationen mit dem Sterilisationsmittel beaufschlagt. Diese Beaufschlagungseinrichtung ist dabei vorteilhaft zumindest teilweise innerhalb des Reinraums angeordnet. Dabei kann sich diese Beaufschlagungseinrichtung mit den einzelnen Umformungsstationen mitbewegen, es wäre jedoch auch möglich, dass die Beaufschlagungseinrichtung stationär angeordnet ist und sich die einzelnen Umformungsstationen an dieser Beaufschlagungseinrichtung vorbeibewegen. Vorteilhaft weist die Vorrichtung eine Vielzahl derartiger Beaufschlagungseinrichtungen auf, die insbesondere an dem besagten Träger angeordnet sind.

Damit befasst sich die Erfindung mit der Frage, ob die Bauteile, insbesondere in einem Reinraum hygienisch miteinander verbunden werden können. Insbesondere flach aufeinander angeordnete bzw. flach aufeinander geschraubte Bauteile sollten aufgrund der Entstehung eines Spalts, in dem sich Keime aufhalten und vermehren können, vermieden werden. Vorteilhaft sind die einzelnen Umformungsstationen an einem gemeinsamen Träger angeordnet, wobei dieser Träger besonders bevorzugt drehbar angeordnet ist. Bei einer bevorzugten Ausführungsform handelt es sich bei der Blasmaschine um eine Streckblasmaschine, bevorzugt weisen also die einzelnen Umformungsstationen Reckstangen auf, welche die Kunststoffvorformlinge in ihrer Längsrichtung dehnen.

Vorteilhaft umgibt der Sterilraum einen Teil der Umformungseinrichtung und insbesondere auch denjenigen Bereich, in dem die einzelnen Umformungsstationen geführt werden.

Bei einer weiteren vorteilhaften Ausführungsform ist eine Antriebswelle der Vorrichtung selbst nicht im Sterilraum angeordnet. Vorteilhaft umgibt der Sterilraum die einzelnen Umformungsstationen kanalförmig. Dabei kann der Sterilraum zwei bezüglich einander bewegbare Wände aufweisen, wobei vorteilhaft diese beiden Wände gegeneinander abgedichtet sind, beispielsweise unter Verwendung eines sogenannten Wasserschlosses.

Vorteilhaft ist ein Bereich des oben erwähnten Dichtmittels bzw. der Dichtungseinrichtung in Sterilisationsrichtung d.h. in derjenigen Richtung, aus der die Beaufschlagung mit dem Sterilisationsmittel erfolgt, sichtbar.

Bei einer weiteren vorteilhaften Ausführungsform sind die besagten Bauteile lösbar miteinander verbunden, beispielsweise verschraubt.

Vorteilhaft handelt es sich bei der Dichtungseinrichtung nicht um eine Flachdichtung, da diese eine ausreichende Verpressung für die Dichtung an allen Punkten der relativ großen Dichtfläche erschwert. Bei einer weiteren vorteilhaften Ausführungsform ist die Dichtungseinrichtung umlaufend ausgebildet, d.h. bevorzugt wird ein vorgegebener Bereich der aneinander angeordneten Bauteile von dieser Dichtungseinrichtung umgeben. Dieser umgebene Bereich kann dabei auch unsteril bzw. nicht sterilisierbar ausgeführt sein.

Insbesondere für lösbare Dichtungen werden dabei sogenannte O-Ringe d. h. ringförmige Dichtungselemente verwendet, wobei diese O-Ringe in eine spezielle Nut eingelegt sein können, die sich in einem der beiden Bauteile befindet und welches dann mit dem jeweils anderen Bauteil zusammengefügt z. B. eingeschraubt wird. Unter ringförmig werden jedoch auch Querschnitte verstanden, die von einem kreisförmigen Querschnitt abweichen, beispielsweise ovale Querschnitte, rechteckige Querschnitte mit abgerundeten Ecken und dergleichen.

Vorteilhaft werden jedoch kreisförmige Dichtungseinrichtungen verwendet. Aus fertigungstechnischen Gründen ist es vorteilhaft, die Nut ebenfalls kreisförmig in das Bauteil einzubringen, da sie dann relativ einfach, z. B. durch Drehen, herstellbar ist. Es wäre jedoch auch möglich, die jeweiligen Nuten zu Fräsen.

Bei einer weiteren vorteilhaften Ausführungsform weist die Vorrichtung eine Vielzahl von Dichtungseinrichtungen auf, welche unmittelbar von dem Sterilisationsmittel beaufschlagbar sind.

Vorteilhaft werden damit eine Vielzahl von Bauteilen mit derartigen Dichtungseinrichtungen verbunden, sodass insgesamt die Sterilisation relativ leicht bewerkstelligt werden kann.

Vorteilhaft weist, wie oben erwähnt, wenigstens eines der Bauteile eine Aufnahmeausnehmung zur Aufnahme der Dichtungseinrichtung auf. Vorteilhaft ist dabei diese Aufnahmeausnehmung als Aufnahmenut ausgebildet.

Besonders bevorzugt ist die Aufnahmeausnehmung umlaufend ausgebildet.

Besonders bevorzugt werden zur Abdichtung ein oder mehrere O-Ringe eingesetzt. Bei einer weiteren vorteilhaften Ausführungsform ist die Ausnehmung als frontbündig gestaltete Nut ausgebildet, wobei jedoch insbesondere ein Bereich der Dichtungseinrichtung bei dem Verbinden der Bauteile nach außen bzw. in Richtung der von dem Sterilisationsmittel beaufschlagten Bereiche gedrängt wird. Bei einer weiteren vorteilhaften Ausführungsform handelt es sich bei wenigstens einer der Dichtungseinrichtungen um einen Wellendichtring.

Bei einer weiteren vorteilhaften Ausführungsform weist die Aufnahmeausnehmung Begrenzungswandungen auf, wobei diese Begrenzungswandungen unterschiedliche Höhen gegenüber einem Aufnahmeausnehmungsgrund aufweisen. Im Gegensatz zum Stand der Technik sind damit diese Ausnehmungen nicht symmetrisch hinsichtlich ihrer Höhe, sondern asymmetrisch gestaltet. Dabei ist es möglich, dass ein Bereich der Dichtungseinrichtung beim Zusammenbau der Bauteile wenigstens teilweise über eine dieser Begrenzungswandungen und insbesondere die niedrigere Begrenzungswandung gedrängt wird.

Vorteilhaft besteht wenigstens eine Dichtungseinrichtung aus einem Elastomer. Die Dichtungseinrichtung kontaktiert vorteilhaft die beiden aneinander angeordneten Bauteile und ist bevorzugt in einem montierten Zustand der beiden Bauteile auch fest gegenüber beiden Bauteilen angeordnet.

Bei einer weiteren vorteilhaften Ausführungsform weist die Dichtungseinrichtung in einem montierten Zustand des Bauteils einen asymmetrischen Querschnitt auf.

Bei einer weiteren vorteilhaften Ausführungsform werden insbesondere solche Spalte, die durch Bauteile verursacht werden, die sich durch eine Isolatorwand oder Reinraumgrenze hindurch erstrecken (wie z. B. die Welle des beweglichen Formträgers oder die Verriegelungswelle) mit Hilfe von Wellendichtringen zur Umgebung hin abgedichtet. Es wäre jedoch auch möglich, anstelle von oder neben Wellendichtringen andere Dichtungen zu verwenden.

Bei einer weiteren vorteilhaften Ausführungsform werden auch Verschleißteile mithilfe einer oder mehrerer Dichtungen, wie z. B. O-Ringen oder Flachdichtungen zum nächsten Bauteil hin abgedichtet.

Bei einer weiteren vorteilhaften Ausführungsform werden insbesondere Schraubverbindungen zwischen den genannten Bauteilen mithilfe von sogenannten Usit-Scheiben abgedichtet. Bei derartigen Usit-Scheiben handelt es sich um metallische Scheiben, an denen eine Dichtwulst, beispielsweise aus elastischem Gummi, anvulkanisiert, festgeklebt, festgeschraubt oder anderweitig befestigt ist.

Genauer gesagt ist an diesen metallischen Scheiben am Umfang eine Dichtlippe aus einem Elastomermaterial ausgebildet. Mithilfe derartiger Scheiben können z. B. Schraubenköpfe abgedichtet werden. Die Dichtscheiben können dabei aus einem Metall, beispielsweise Edelstahl bestehen. Die Dichtlippen können beispielsweise aus einem Elastomer bestehen. In weiteren Ausführungsformen bestehen diese Dichtscheiben aus anderen Werkstoffen, beispielsweise aus einem Kunststoff mit angefügter Dichtlippe. Diese Dichtlippe kann je nach Einsatzzweck an einem inneren oder an einem äußeren Durchmesser angeordnet sein.

Bei einer weiteren vorteilhaften Ausführungsform weist wenigstens eines der genannten Bauteile wenigstens eine zylinderförmige Erhebung zum Verbinden mit dem anderen Bauteil auf. Üblicherweise weisen nicht alle zu verbindenden Bauteile kreisrunde Kontaktflächen zu dem jeweils nächsten Bauteil auf, weshalb eine Abdichtung mittels O-Ringen bisweilen schwierig ist. Als Lösung für dieses Problem wird daher vorgeschlagen, an den betreffenden Bauteilen zylinderförmige Erhebungen anzubringen, die wiederum mit einer runden O-Ringnut versehen werden können. Auf diese Weise können auch Verschleißteile, insbesondere Teile des Verriegelungsmechanismus, die regelmäßig getauscht werden sollten, befestigt werden.

Bei einer weiteren vorteilhaften Ausführungsform handelt es sich bei dem ersten Bauteil um einen Formträger und bei dem zweiten Bauteil um ein Blasformteil. Derartige Blasformen für Streckblasmaschinen weisen üblicherweise einen halbrunden Querschnitt auf. Sie werden in einen Formträger eingesetzt und in diesem fixiert. Auf diese Weise entsteht ein relativ großflächiger Spalt. Aufgrund der Fertigungstoleranzen kann dieser Spalt eine Dicke von 0 mm bis hin zu einigen 1/10 mm aufweisen. Beim Bau einer aseptischen Blasmaschine sollten jedoch derartige Spalte innerhalb der sterilen Zone vermieden werden, da sich in diesen, wie oben erwähnt, Keime ausbilden können, die durch die enge Geometrie in dem Spalt bei Sterilisation der Maschine vor Abtötung geschützt wären.

Die einfachste Möglichkeit zur Vermeidung des Spaltes ist die Abdichtung. Diese Dichtungseinrichtung kann sich hierbei zwischen der Blasform und dem Formträger befinden, wobei unter dem Formträger dasjenige Maschinenbauteil verstanden wird, in das die Blasform eingesetzt wird. Die Dichtungseinrichtung kann, wie oben erwähnt, einen kreisförmigen Querschnitt aufweisen, oder auch als Lippendichtung ausgeführt sein. Es wären jedoch auch andere Querschnitte möglich. Daneben könnte auch ein Hohlkammerprofil verwendet werden, das ggfs. zur besseren Abdichtung nach dem Einbau der Form mithilfe eines Innendrucks aufgeblasen werden kann. Zur Aufnahme der Dichtungseinrichtung können ggfs. an der Form und/oder dem Formträger spezielle Formelemente, wie Nuten oder Einstiche, angebracht sein, die den korrekten Sitz und die Fixierung der Dichtungseinrichtung sicherstellen. Bei einer vorteilhaften Ausführungsform ist die Dichtfläche eben, wodurch die Fertigung vereinfacht wird.

Bei einer weiteren vorteilhaften Ausführungsform sind innerhalb eines von der Dichtungseinrichtung umgebenen Abschnitts Zuführungseinrichtungen zum Zuführen eines Temperiermediums angeordnet. Dieses Temperiermedium kann dabei zum Kühlen oder Wärmen des Blasformträgers oder auch der Blasform dienen. Damit ist insbesondere der innerhalb des von der Dichtungseinrichtung umgebenden Abschnitts unsteril. Dies führt dazu, dass innerhalb des Sterilraums bestimmte Bereiche der Umformungsstationen unsteril sind, wobei diese unsterilen Bereiche jedoch gegenüber dem Sterilraum abgedichtet sind. Der in diesem Falle außerhalb der Dichtungseinrichtung liegende Bereich des jeweiligen Bauteils ist vorteilhaft wiederum sterilisierbar.

Bei einer weiteren vorteilhaften Ausführungsform weist die Blasform eine Ausnehmung zur Aufnahme eines temperierbaren Bereichs des Blasformträgers auf. Diese Ausnehmung dient insbesondere zum Kühlen der Blasform. Auf diese Weise ist es möglich, dass die Blasform selbst ohne Temperiermittelkanäle auskommt und lediglich durch Kontakt mit dem Blasformträger temperiert wird.

Bei einer weiteren vorteilhaften Ausführungsform weist die Blasform eine ebene Rückseite auf.

Weiterhin ist ein Verfahren zum Umformen von Kunststoffvorformlingen zu Kunststoffbehältnissen beschrieben. Dabei ist eine Vielzahl von Umformungsstationen, welche an einem beweglichen Träger angeordnet sind, vorgesehen, wobei die Umformungsstationen jeweils Blasformen aufweisen, innerhalb derer die Kunststoffvorformlinge durch Beaufschlagung mit einem fließfähigen Medium zu Kunststoffbehältnissen umgeformt werden. Auch sind Blasformträger zum Halten dieser Blasformen vorgesehen, wobei wenigstens Blasformträgerteile dieser Blasformträger relativ zueinander zum Öffnen und Schließen der Blasformen bewegt werden.

Daneben ist ein mit einem gegenüber einer Umgebung mittels wenigstens einer Wandung abgegrenzter Reinraum vorgesehen, der die einzelnen Umformungsstationen wenigstens teilweise umgibt, wobei die Umformungsstationen innerhalb dieses Reinraums bewegt werden und wenigstens eine Beaufschlagungseinrichtung, um wenigstens einen Bereich der sich innerhalb des Reinraums bewegenden Umformungsstationen mit einem fließfähigen Sterilisationsmittel zu beaufschlagen.

Verfahrensgemäß weist wenigstens eine Umformungsstation wenigstens zwei in einem Arbeitsbetrieb permanent aneinander befestigte Bauteile auf, und zwischen diesen Bauteilen ist eine elastische Dichtungseinrichtung angeordnet, wobei diese Dichtungseinrichtung einen zwischen diesen Bauteilen gebildeten Spalt derart ausfüllt und/oder schließt, dass die Dichtungseinrichtung unmittelbar von dem Sterilisationsmittel beaufschlagt wird.

Es ist dabei möglich, dass die beiden Bauteile starr aneinander befestigt sind, es wäre jedoch auch möglich, dass die beiden Bauteile zwar aneinander befestigt sind, dabei jedoch bezüglich einander relativbeweglich sind.

Es wird daher auch verfahrensseitig vorgeschlagen, dass die Dichtungseinrichtung selbst mit einem Sterilisationsmittel beaufschlagt wird und daher ebenfalls Spalte zwischen den Bauteilen, in denen sich Keime bilden und/oder vermehren können, verhindert werden.

Weitere Vorteile und Ausführungsformen ergeben sich aus den beigefügten Zeichnungen. Darin zeigen:
- Fig. 1: eine schematische Darstellung einer Anlage zum Herstellen von Kunststoffbehältnissen; und
- Fig. 2: eine Ansicht eines Reinraums im Bereich einer Blasstation.
- Fig. 3: die Verbindung zweier Bauteile nach dem Stand der Technik;
- Fig. 4a, 4b: zwei Darstellungen zur Veranschaulichung einer erfindungsgemäßen Verbindung zweier Bauteile;
- Fig. 5: eine Darstellung eines Bauteils mit Ausnehmung für eine Dichtungseinrichtung;
- Fig. 6: eine weitere Darstellung eines Bauteils mit Ausnehmung für eine Dichtungseinrichtung;
- Fig. 7a, 7b: zwei Darstellungen für eine Ausführungsform einer Abdichtung;
- Fig. 8: eine weitere Darstellung für eine erfinderische Ausgestaltung einer Dichtungseinrichtung;
- Fig. 9: eine weitere Ausführungsform für eine erfindungsgemäße Dichtungseinrichtung;
- Fig. 10: eine Teilansicht eines Blasformträgers mit daran angeordneter Blasform;
- Fig. 11: eine Rückansicht der in Fig. 10 gezeigten Blasform;
- Fig. 12: eine weitere Ausführungsform eines Blasformhalters mit Blasform;
- Fig. 13: eine weitere Ausgestaltung einer Blasformhalterung mit Blasform;
- Fig. 14: eine Darstellungen einer Anordnung mit einer Blasform an einem Blasformträger; und
- Fig. 15: eine weitere Ausführungsform einer erfindungsgemäßen Vorrichtung.

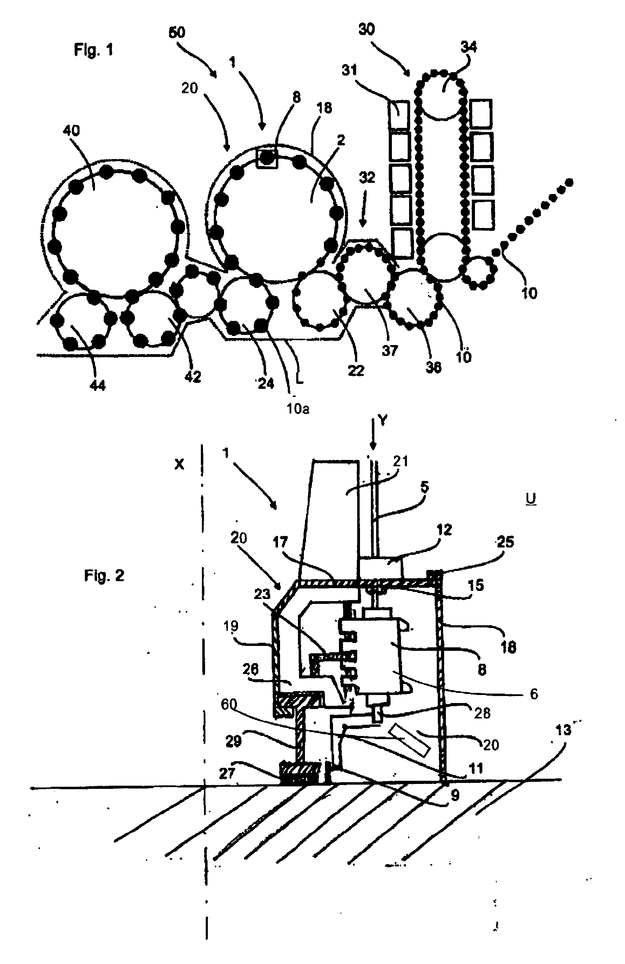

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch, wie oben erwähnt, durch elektromagnetische bzw. UV-Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet ist. In einer weiteren bevorzugten Ausführungsform ist der Reinraum 20 nicht nur im Bereich von Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas aus dem Reinraum 20 strömt und so verloren geht.

Der Reinraum 20 ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen 8 angeordnet ist, wobei hier lediglich eine dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 10a von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet ist, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 (d.h. dem Träger 2) drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 28 unterhalb der einzelnen Blasstationen 8 aus dem Reinraum 20 herauszuführen.

Die Führungskurve könnte dabei beispielsweise unter dem Reinraum 20 angeordnet sein und/oder auch seitlich versetzt zu dem Reinraum 20 oder aber auch über dem Reinraum 20

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange 5 während des Blasvorgangs sowohl außerhalb des Reinraums 20 als auch innerhalb des Reinraums sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt.

Die einzelnen Blasstationen bzw. Umformungsstationen 8 weisen jeweils Blasformträger 6 auf, innerhalb derer die Blasformen (in Fig. 2 nicht gezeigt) angeordnet sind. Diese Blasformträger können hier, wie im Stand der Technik bekannt, zwei Blasformträgerteile aufweisen, die bezüglich einander mittels einer gemeinsamen Schwenkwelle 3 zum Öffnen und Schließen der Blasform schwenkbar sind.

Das Bezugszeichen 60 kennzeichnet hier eine Beaufschlagungseinrichtung, welche zum Beaufschlagen der Umformungsstationen mit dem fließfähigen Sterilisationsmittel dient. Diese Beaufschlagungseinrichtung 60 kann sich am Transportrad 2 oder an der stehenden Wandung 18 befinden oder generell stationär angeordnet sein und Düsen o ähnliches aufweisen. Zudem ist es vorteilhaft, Sterilluft zum Sterilisieren des Reinraums 20 über das Lüftungssystem in den Reinraum 20 einzubringen.

Alternativ oder zusätzlich könnte es sich jedoch bei der Beaufschlagungseinrichtung jedoch auch um eine Einrichtung handeln, welche die Umformungsstationen mit (insbesondere elektromagnetischer) Strahlung, z.B. UV - oder Elektronenstrahlung beaufschlagt. In diesem Falle wäre vorteilhaft wenigstens ein Bereich der Dichtungseinrichtung in einem zusammengebauten Zustand der Bauteile für diese elektromagnetische Strahlung erreichbar.

Innerhalb des Sterilraums sind nun die beiden miteinander verbundenen Bauteile angeordnet. Im Folgenden werden einige Beispiele für erfindungsgemäß aneinander angeordnete Bauteile ausgeführt. So könnte es sich beispielsweise bei den Bauteilen um einen Blasformträger mit daran angeordneter Blasform handeln oder auch um aneinander angeordnete Bauteile eines Verschließmechanismus zum Verschließen der Blasformen. Allgemein ist jedoch die Erfindung auf beliebige, insbesondere innerhalb des Sterilraums aneinander angeordnete, Bauteile anzuwenden, aber auch auf Bauteile, welche an einer (Innen)wandung des Sterilraums angeordnet sind oder auf teilweise außerhalb und teilweise innerhalb des Sterilraums angeordnete Bauteile. Das Bezugszeichen U in Fig. 2 bezieht sich auf eine (unsterile) Umgebung des Reinraums 20.

Es wäre jedoch auch (anders als in Fig. 2 gezeigt) möglich und bevorzugt, dass die Transporteinrichtung 2 bzw. der Träger einen C - förmigen Aussenumfang aufweist, der auch teilweise die Aussenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Aussenwandung des Reinraums statt. Diese Aussenwandung ist dabei vorteilhaft stationär angeordnet.

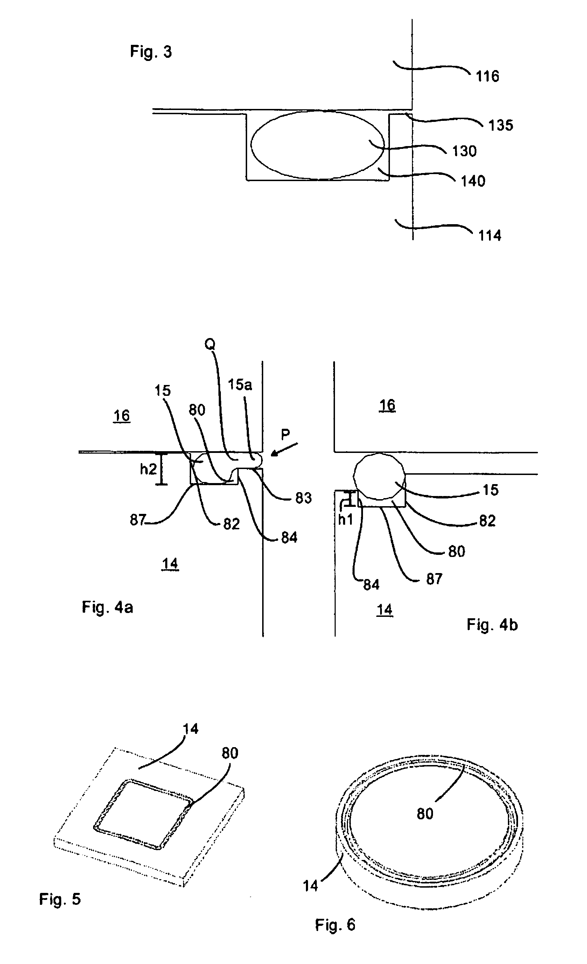

Fig. 3 zeigt eine Verbindung zwischen zwei Bauteilen 114, 116 nach dem Stand der Technik. Zwischen diesen beiden Bauteilen ist eine elastische Dichtungseinrichtung 130 beispielsweise in Form eines O-Rings angeordnet. Beim Verbinden der beiden Bauteile 114,116 kann jedoch ein Spalt 135 verbleiben, in dem sich Keime ansetzen können. Falls nun die Bauteile mit einem Sterilisationsmedium beaufschlagt werden, ist es möglich, dass dieses Sterilisationsmedium die in dem Spalt 135 befindlichen Keime nicht erreicht und damit nicht abtöten kann. Auf diese Weise kann die Keimfreiheit einer entsprechenden Maschine nicht gewährleistet werden. Das Bezugszeichen 140 kennzeichnet eine Ausnehmung bzw. Nut, in der die Dichtungseinrichtung 130 angeordnet ist.

Die Fig. 4a und 4b zeigen eine erfindungsgemäße Verbindung zweier Bauteile 14, 16. Man erkennt, dass auch hier eine Dichtungseinrichtung 15 zwischen den beiden Bauteilen angeordnet ist, genauer gesagt in einer Ausnehmung 80 des ersten Bauteils 14. Fig. 4b zeigt den Zustand, bei dem die Bauteile 14 und 16 nicht fest miteinander verbunden sind. Die Dichtungseinrichtung 15 ist hier noch nicht in einem gespannten Zustand. Bei der in Fig. 4a gezeigten Situation sind die beiden Bauteile fest aneinander angeordnet. Man erkennt, dass sich ein Bereich 15a der Dichtungseinrichtung derart zwischen die beiden Bauteilen 14 und 16 schiebt, dass auch dieser Bereich nicht von einem entlang des Pfeils P zugeführten Sterilisationsmedium erreichbar ist.

Erreicht kann dies beispielsweise werden durch die besondere Ausgestaltung der Ausnehmung 80. Man erkennt, dass die Seitenwände 82, 84 der Ausnehmung 80 unterschiedliche Höhen h1 und h2 gegenüber dem Ausnehmungsgrund 87 aufweisen. Auf diese Weise ist es möglich, dass die Dichtungseinrichtung, deren Durchmesser selbst erheblich größer ist als die Höhe h2 der Seitenwandung 84, über diese Seitenwandung bzw. den oberen Abschnitt 83 dieser Seitenwandung hinweg gedrängt und damit nach außen gedrängt wird. Auf diese Weise ergibt sich in einem zusammengebauten Zustand das in Fig. 4a gezeigte unsymmetrische Profil bzw. der unsymmetrische Querschnitt Q der Dichtungseinrichtung.

Die Fig. 5 und 6 zeigen zwei mögliche Ausgestaltungen von Ausnehmungen 80, die in dem Bauteil 14 angeordnet sind. Die Ausnehmung 80 bei Fig. 5 ist dabei rechteckig mit abgerundeten Ecken ausgestaltet. Die Ausnehmung 80 im Falle von Fig. 6 ist rund ausgebildet. Es ist jedoch möglich, dass die Ausnehmung auch andere Formen aufweist, beispielsweise allgemeine polygonale Formen, elliptische Formen und dergleichen.

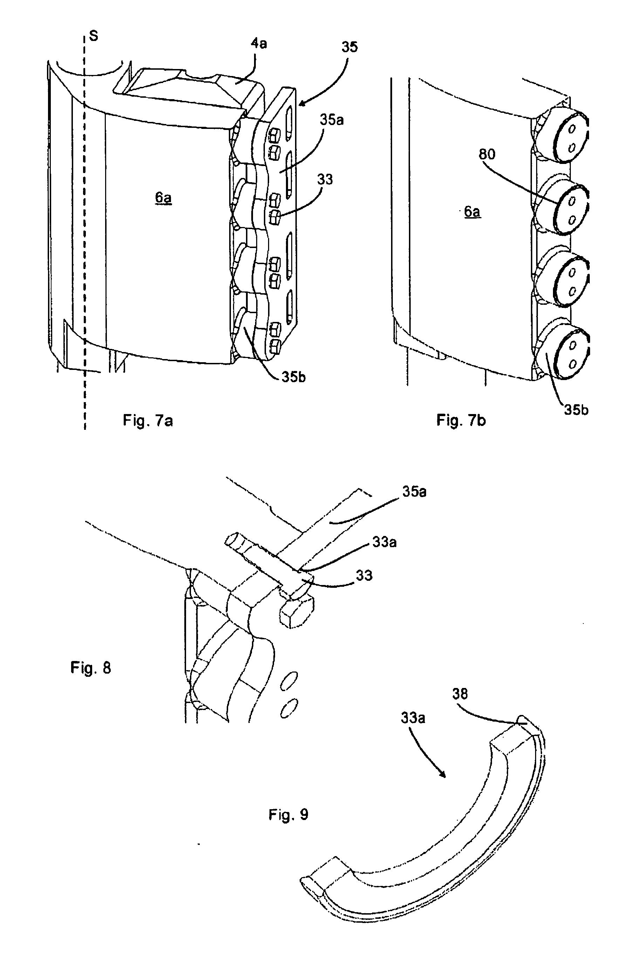

Die Fig. 7a und 7b zeigen zwei mögliche Anwendungsbeispiele für erfindungsgemäße Dichtungseinrichtungen innerhalb des Reinraums. Dabei ist hier an dem Blasformträger 6 bzw. an dem Blasformträgerteil 6a eine Blasform 4 bzw. ein Blasformteil 4a angeordnet. Das Bezugszeichen 35 kennzeichnet einen Verriegelungsmechanismus der an dem Blasformträgerteil 6a angeordnet ist. Dabei ist hier eine Verriegelungsplatte 35a an einer Vielzahl von Vorsprüngen 35b mit einer Vielzahl von Schrauben 33 lösbar angeordnet. Man erkennt, dass hierbei Spalte entstehen können, in denen sich Keime festsetzen können. Aus diesem Grunde wurden die einzelnen Vorsprünge 35 als Erhebungen dargestellt, die, wie in Fig. 7b gezeigt, vergleichsweise leicht mit den Ausnehmungen 80 zum Einbringen der Dichtungseinrichtungen versehen werden können. Das Bezugszeichen S kennzeichnet eine Schwenkachse, um die der Blasformträger 6a mit der Blasform 4 schwenkbar ist.

Bei diesen Ausführungsformen stellen damit die Erhebung 35b das erste Bauteil und die Verriegelungsplatte 35a das zweite Bauteil, die miteinander verbunden sind, dar.
Fig. 8 zeigt eine Detaildarstellung der Schrauben 33. Unter diesen Schrauben 33 sind hier zumindest bereichsweise elastische Dichtscheiben 33a, die wiederum als Dichtungseinrichtungen fungieren, angeordnet, sodass auch zwischen den Schrauben 33 und der Verriegelungsplatte 35a das Entstehen von Spalten verhindert wird. Damit stellen hier die Schraube 33 das erste Bauteil und die Verriegelungsplatte 35a das zweite Bauteil dar.
Fig. 9 zeigt eine Darstellung der Dichtscheibe 33a. An dieser Dichtscheibe 33a ist, wie in Fig. 9 dargestellt, eine Dichtlippe 38 angeordnet, die gegenüber einer Oberflächenebene der Dichtscheibe 33a beidseitig über diese hinausragt. Diese Dichtungseinrichtung 38 bzw. die Dichtlippe 38 kann dabei an die Dichtscheibe 33b anvulkanisiert sein. Die Dichtlippe 38 übernimmt hier die Funktion der Dichtungseinrichtung 15.

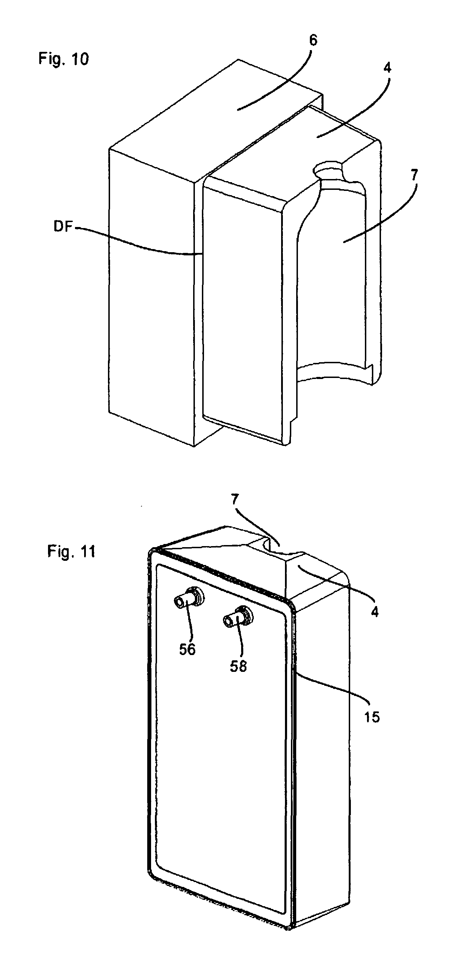

Fig. 10 zeigt eine Veranschaulichung eines Blasformträgers mit einer daran angeordneten Blasform 4. Das Bezugszeichen 7 kennzeichnet einen Hohlraum, innerhalb dessen die Kunststoffvorformlinge zu Kunststoffbehältnissen expandiert werden. Auch zwischen der Blasform 4 und dem Träger können dabei, wie oben erwähnt, die Spalte entstehen, in denen sich Keime bilden und vermehren können. Das Bezugszeichen DF kennzeichnet die entstehende Dichtfläche. Falls diese Dichtfläche beispielsweise eben ist, kann auf diese Weise die Fertigung erleichtert werden. Wie erwähnt, kann jedoch diese Ausführungsform Nachteile mit sich bringen.

Fig. 11 zeigt eine weitere Darstellung der Blasform 4. Man erkennt hier wiederum die umlaufende Dichtungseinrichtung 15. Weiterhin sind hier zwei Anschlüsse 56 und 58 vorgesehen, um die Blasform beispielsweise zu temperieren. Entsprechende Kühlbohrungen können in dem in Fig. 10 gezeigten Blasformträger 6 angeordnet sein. Werden jedoch entsprechende Kühlbohrungen in dem Formträger 6 platziert, so sind diese relativ weit weg von der zu kühlenden Oberfläche, nämlich der Flaschengeometrie. Dadurch wird der Wärmeübergang beeinträchtigt. Auf der anderen Seite müssten sich die Kühlbohrungen in der Blasform 4 befinden, wozu folgende Lösung vorgeschlagen wird. Da es sich bei der Blasform 4 um ein Wechselteil handelt, sind Kupplungen in der Medienzuführung erforderlich. Aus hygienischen Gesichtspunkten ist es vorteilhaft, wenn diese Kupplungen 56 und 58 an der Kontaktfläche zwischen der Blasform 4 und dem Blasformträger 6 angeordnet sind. Diese Fläche ist dabei durch die in Fig. 11 gezeigte umlaufende Dichtungseinrichtung 15 abgedichtet, und muss daher nicht zwangsläufig steril sein, sondern kann als unsteriler Bereich angesehen werden.

Durch diese integrierten Kühlbohrungen in den Medienkupplungen werden aber die Formen, von denen üblicherweise mehrere Sätze für verschiedenste Flaschengrößen- und Formen vorgehalten werden, teurer.

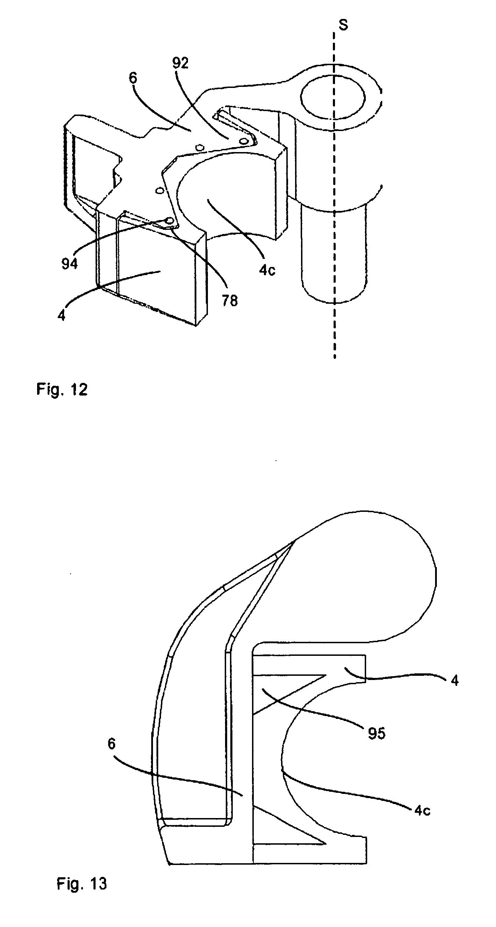

Fig. 12 und 13 zeigen eine Ausführungsform um dieses Problem zu umgehen. Man erkennt, dass hier der Blasformträger 6 Vorsprünge 92 aufweist, und weiterhin in dem Blasformträger 6 auch Kühlmittelbohrungen 94 angeordnet sind. In der Blasform 4 selbst sind bei dieser Ausführungsform keine Kühlmittelbohrungen, die Blasform wird daher über den Blasformträger temperiert bzw. gekühlt. Durch die Ausgestaltungen mit den Vorsprüngen 92, die sich sehr nahe an die Wandung 4c der Blasform erstrecken, ist dennoch eine effiziente Kühlung der Blasform möglich. Doch hier können zwischen der Blasform 4 und dem Träger 6 die oben beschriebenen Dichtungseinrichtungen angeordnet sein. Das Bezugszeichen 78 kennzeichnet in der Blasform ausgebildete Ausnehmungen, in welche die besagten Vorsprünge 92 ragen. Das Bezugszeichen S kennzeichnet wieder die Schwenkachse, um die der Blasformträger 6 schwenkbar ist.

Alternativ wäre es auch möglich, die Blasform 4 mit einer ebenen Rückseite auszugestalten. Um hier eine gute Wärmeabfuhr sicherzustellen, können in die Blasform Wärmeleitelemente 95 (vgl. Fig. 13) integriert sein. Diese Wärmeelemente sind zweckmäßigerweise fest in die Form integriert. Diese Wärmeleitelemente 95 weisen dabei vorteilhaft eine verbesserte Wärmeleitfähigkeit auf und können beispielsweise aus Kupfer oder dergleichen bestehen. Über diese Wärmeleitelemente 95 kann die Temperatur des Blasformträgers vereinfacht zu der Blasform 4 bzw. zu der zu temperierenden Innenwandung 4c der Blasform transportiert werden.

Bei einer weiteren Ausführungsform wäre es auch möglich, die in Fig. 11 gezeigte Dichtungseinrichtung rund zu gestalten, was insbesondere hinsichtlich der Herstellung Vorteile mit sich bringt.

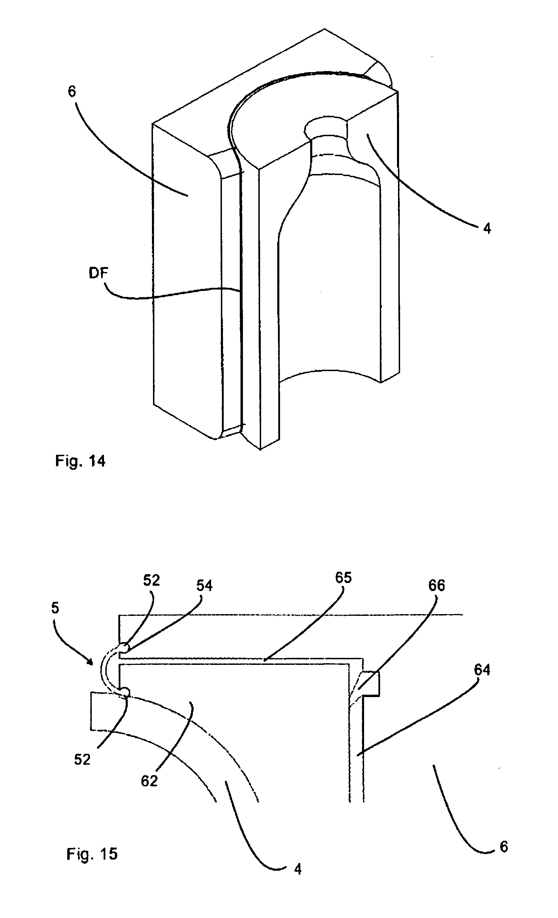

In Fig. 14 ist eine weitere derartige Ausgestaltung der Dichtungseinrichtung dargestellt. Wie in Fig. 14 gezeigt, entsteht auch hier wiederum eine Dichtfläche zwischen der Blasform 4 und dem Blasformträger 6, welche durch eine umlaufende Dichtungseinrichtung abgedichtet werden sollte. Auch hier kann die Dichtungseinrichtung wiederum in der in den obigen Fig. 4a und 4b gezeigten Ausgestaltung ausgebildet sein. Auf diese Weise ist der Spalt abgedichtet und stellt kein mikrobiologisches Risiko mehr dar. Die in Fig. 14 gezeigte Ausführungsform kann jedoch auch ohne eine Dichtungseinrichtung ausgeführt sein.

Fig. 15 zeigt eine weitere Ausgestaltung der vorliegenden Erfindung. Hier ist zwischen der Blasform 4 und dem Blasformträger 6, genauer zwischen dem Blasformträger 6 und einer Blasformträgerschale 62 eine Dichtungseinrichtung 5 angeordnet. Diese Dichtungseinrichtung erstreckt sich hier senkrecht zu der Figurenebene. Die Blasform 4 ist dabei fest an dieser Blasformträgerschale 62 angeordnet. Zwischen der Blasformträgerschale 62 und dem Blasformträger 6 ist ein Spalt 64 ausgebildet, der mit Druckluft beaufschlagt werden kann. Auf diese Weise wird ein sogenanntes Druckkissen ausgebildet, welches während des Blasformprozesses eines der beiden Blasformteile (nur eines gezeigt) auf das andere zu presst. Dies bedeutet, dass sich bei Beaufschlagung mit Druckluft die Blasform 4 und der Blasformträger 6 geringfügig auseinander bewegen. Es befindet sich damit in dem Blasformträger ein Druckkissen, welches bewirkt, dass sich die Formträgerschale 62 im Betrieb vor und zurück bewegt, so dass eine Relativbewegung zwischen Formträger und Formträgerschale entsteht. Wie erwähnt, muss auch dieser Spalt aus hygienischen Gründen abgedichtet werden.

Das Bezugszeichen 66 bezieht sich auf eine Dichtungseinrichtung, welche den Spalt 64 abdeckt. Falls gleichwohl Luft diesen Spalt passiert, gelangt diese gleichwohl nicht in den Reinraum sondern wird von der Dichtungseinrichtung 5 zurückgehalten. Die Dichtungseinrichtung 5 deckt damit den Spalt 64 und auch den Zwischenspalt 65 vollständig ab, so dass sich auch in diesem Bereich keine Keime ausbilden können.

Während des Sterilisationsvorgangs wird die Dichtungseinrichtung, genauer deren Aussenseite mit dem Sterilisationsmedium beaufschlagt. Insgesamt wird daher die Funktion der Dichtungseinrichtung 5, welche die Blasform 4 abdichtet, erweitert. Diese Dichtungseinrichtung erstreckt sich hier bis zu dem Blasformträger 6 und überbrückt so den Spalt 65 zwischen dem Blasformträger und der Formträgerschale 62. Auf diese Weise ist es möglich, zwei Dichtstellen mit nur einer Dichtungseinrichtung 5 abzudichten. Eine entsprechende Ausgestaltung ist jedoch auch möglich, falls kein Druckkissen vorgesehen ist, etwa auf der Seite des anderen (nicht gezeigten) Blasformteils. Auch hier kann ein Spalt abgedichtet werden, der zwischen der Blasform und einem die Blasform aufnehmenden Teil entsteht sowie auch ein weiterer Spalt. Bei dieser Ausführungsform ist es denkbar, dass die Blasform 4 nicht in einer Formträgerschale 62 liegt sondern direkt an dem Blasformträger angeordnet ist.

Es wird daher bei diesen in Fig. 15 gezeigten Ausführungsformen vorgeschlagen, dass die Dichtungseinrichtung mehr als einen Spalt abdichtet.

Bei der hier gezeigten Ausführungsform ist die Dichtungseinrichtung mit zwei Endabschnitten 52 jeweils in Nuten 54 angeordnet. Zwischen diesen Endabschnitten ist die Dichtungseinrichtung 5 flexibel ausgebildet. Es wären jedoch auch andere Möglichkeiten der Fixierung denkbar. So könnte die Dichtungseinrichtung 5 auch eingeklemmt sein, etwa durch Schrauben oder durch eine mit Schrauben verspannte Leiste. Daneben könnte eine Fixierung auch über ein Spannband erfolgen.

Ein Vorteil der in Fig. 15 gezeigten Ausführungsform besteht darin, dass die Dichtungseinrichtung bei Veschleiß und Beschädigung leicht von vorne gewechselt werden kann, ohne hierzu die gesamte Baugruppe demontieren bzw. zerlegen zu müssen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Transportrad, Transporteinrichtung
- 4: Blasform
- 4a: Blasformteil
- 4c: Wandung
- 5: Reckstange
- 6: Blasformträger
- 6a: Blasformträgerteil
- 7: Hohlraum
- 8: Blasstation
- 9: Führungskurve
- 10: Kunststoffvorformlinge
- 10a: Behältnis
- 11: Folgeeinrichtung
- 12: Schlitten
- 13: Boden
- 14: erstes Bauteil
- 15: Dichtungseinrichtung, Dichtlippe
- 15a: Bereich
- 16: zweites Bauteil
- 17: Deckel
- 18: Wandung
- 19: Seitenwand, Abschnitt
- 20: Reinraum
- 21: Halterung
- 22: Zuführeinrichtung
- 23: Halteeinrichtung
- 24: Abführeinrichtung
- 25: Dichtungseinrichtung
- 26: Träger
- 27: Dichtungseinrichtung
- 28: Abschnitt
- 29: Haltekörper
- 30: Heizeinrichtung
- 31: Heizelemente
- 32: Sterilisationseinrichtung
- 33: Schrauben
- 33a: Dichtscheibe
- 34: Transporteinrichtung
- 35: Verriegelungsmechanismus
- 35a: Verriegelungsplatte
- 35b: Vorsprünge
- 36: Übergabeeinheit
- 37: Transportrad
- 38: Dichtlippe
- 40: Befüllungseinrichtung
- 42: Übergabeeinheit
- 44: Transporteinheit
- 50: Anlage
- 52: Endabschnitt der Dichtungseinrichtung
- 54: Nut
- 56, 58: Kupplungen
- 60: Beaufschlagungseinrichtung
- 62: Formträgerschale
- 64: Spalt
- 65: Spalt
- 66: Dichtungseinrichtung
- 78: Ausnehmung
- 80: Ausnehmung
- 82: Seitenwand
- 83: Abschnitt
- 84: Seitenwand
- 87: Ausnehmungsgrund
- 92: Vorsprünge
- 94: Kühlmittelbohrungen
- 95: Wärmeleitelemente
- 114, 116: Bauteile (StdT)
- 130: Dichtungseinrichtung (StdT)
- 135: Spalt (StdT)
- 140: Nut (StdT)
- DF: Dichtfläche
- h 1, h2: Höhen
- L: Linie
- P: Pfeil
- S: Schwenkachse
- X: Achse
- Y: Richtung
- U: Umgebung
- Q: Querschnitt

## Patentansprüche

1. Vorrichtung (1) zum Umformen von Kunststoffvorformlingen (10) zu Kunststoffbehältnissen (10a) mit einer Vielzahl von Umformungsstationen (8), welche an einem beweglichen Träger (2) angeordnet sind, wobei die Umformungsstationen (8) jeweils Blasformen (4) aufweisen, innerhalb derer die Kunststoffvorformlinge (10) durch Beaufschlagung mit einem fließfähigen Medium zu Kunststoffbehältnissen (10a) umformbar sind sowie Blasformträger (6) zum Halten dieser Blasformen (4) und wobei die Blasformträger (6) wenigstens zwei relativ zueinander bewegliche Blasformträgerteile (6a) zum Öffnen und Schließen der Blasformen (4) aufweisen, mit einem gegenüber einer Umgebung (U) mittels wenigstens einer Wandung (18) abgegrenzten Reinraum (20), der die einzelnen Umformungsstationen (8) wenigstens teilweise umgibt, so dass die Umformungsstationen (8) innerhalb dieses Reinraums (20) bewegbar sind und mit wenigstens einer Beaufschlagungseinrichtung (60), zum wenigstens einen Bereich der innerhalb des Reinraums (20) bewegbaren Umformungsstationen (8) mit einem fließfähigen Sterilisationsmittel zu beaufschlagen,
**dadurch gekennzeichnet, dass**
wenigstens eine Umformungsstation (8) wenigstens zwei in einem Arbeitsbetrieb permanent aneinander befestigte Bauteile (14, 16) aufweist, und zwischen diesen Bauteilen eine elastische Dichtungseinrichtung (15) angeordnet ist. wobei diese Dichtungseinrichtung (16) einen zwischen diesen Bauteilen (14, 16) gebildeten Spalt derart ausfüllt und/oder schließt, dass die Dichtungseinrichtung (15) unmittelbar von dem Sterilisationsmittel beaufschlagbar ist.

2. Vorrichtung nach Anspruch 1,
**dadurch gekennzeichnet, dass**
die Dichtungseinrichtung (15) als umlaufende Dichtungseinrichtung (15) ausgebildet ist.

3. Vorrichtung nach Anspruch 2,
**dadurch gekennzeichnet, dass**
die Dichtungseinrichtung (15) ringförmig ausgebildet ist

4. Vorrichtung (1) nach wenigstens einem der vorangegangenen Ansprüche, mit einer Vielzahl von Dichtungseinrichtungen (15), welche unmittelbar von dem Sterilisationsmittel beaufschlagbar sind.

5. Vorrichtung nach wenigstens einem der vorangegangenen Ansprüche,
**dadurch gekennzeichnet, dass**
wenigstens eines der Bauteile (14) eine Aufnahmeausnehmung (80) zur Aufnahme der Dichtungseinrichtung (15) aufweist.

6. Vorrichtung nach Anspruch 5,
**dadurch gekennzeichnet, dass**
die Aufnahmeausnehmung (80) umlaufend ausgebildet ist.

7. Vorrichtung nach Anspruch 5,
**dadurch gekennzeichnet, dass**
die Aufnahmeausnehmung (80) Begrenzungswandungen (82, 84) aufweist, wobei diese Begrenzungswandungen unterschiedliche Höhen (h1, h2) gegenüber einem Aufnahmeausnehmungsgrund (87) aufweist.

8. Vorrichtung nach wenigstens einem der vorangegangenen Ansprüche.
**dadurch gekennzeichnet, dass**
die Dichtungseinrichtung (15) aus einem Kunststoff besteht.

9. Vorrichtung nach Anspruch 8,
**dadurch gekennzeichnet, dass**
die Dichtungseinrichtung (15) aus einem Elastomer oder einem Thermoplasten besteht.

10. Vorrichtung nach wenigstens einem der vorangegangenen Ansprüche,
**dadurch gekennzeichnet, dass**
die Dichtungseinrichtung (15) in einem montierten Zustand der Bauteile (14, 16) einen asymmetrischen Querschnitt (Q) aufweist.

11. Vorrichtung nach wenigstens einem der vorangegangenen Ansprüche,
**dadurch gekennzeichnet, dass**
wenigstens eines der Bauteile (14, 16) wenigstens eine zylinderförmige Erhebung (35b) zum Verbinden mit dem anderen Bauteil (16, 14) aufweist.

12. Vorrichtung nach wenigstens einem der vorangegangenen Ansprüche,
**dadurch gekennzeichnet, dass**
das erste Bauteil ein Formträger und das zweite Bauteil ein Blasformteil ist.

13. Vorrichtung nach wenigstens einem der vorangegangenen Ansprüche,
**dadurch gekennzeichnet, dass**
innerhalb eines von der Dichtungseinrichtung (15) umgebenen Abschnitts Zuführungseinrichtungen zum Führen eines Temperiermediums angeordnet sind.

## Claims

1. Device (1) for transforming plastics material preforms (10) into plastics material containers (10a) with a plurality of transforming stations (8) which are disposed on a movable carrier (2), wherein the transforming stations (8) each have blow moulds (4), within which the plastics material preforms (10) can be transformed into plastics material containers by acting upon them with a flowable medium (10a), and blow mould supports (6) for holding these blow moulds (4), and wherein the blow mould supports (6) have at least two blow mould support parts (6a) which are movable relative to one another for opening and closing the blow moulds (4), with a clean room (20) which is demarcated with respect to the surroundings (U) by means of at least one wall (18) and which at least partially surrounds the individual transforming stations (8), so that the transforming stations (8) are movable within this clean room (20), and with at least one supply unit (60) in order to act upon at least one region of the transforming stations (8) which are movable within the clean room (20) with a flowable sterilising medium, **characterized in that** at least one transforming station (8) has at least two components (14, 16) which are permanently fastened to one another in a working operation, and a resilient sealing means (15) is disposed between these components, wherein this sealing means (15) fills and/or closes a gap formed between these components (14, 16) in such a way that the sealing means (15) can be acted upon directly with the sterilising medium.

2. Device as claimed in Claim 1, **characterized in that** the sealing means (15) is designed as a peripheral sealing means (15).

3. Device as claimed in Claim 2, **characterized in that** the sealing means (15) is of annular construction.

4. Device (1) as claimed in at least one of the preceding claims, with a plurality of sealing means (15) which can be acted upon directly with the sterilising medium.

5. Device as claimed in at least one of the preceding claims, **characterized in that** at least one of the components (14) has a receiving recess (80) to accommodate the sealing means (15).

6. Device as claimed in Claim 5, **characterized in that** the receiving recess (80) is peripheral.

7. Device as claimed in Claim 5, **characterized in that** the receiving recess (80) has boundary walls (82, 84), wherein these boundary walls have different heights (h1, h2) with respect to the base (87) of the receiving recess.

8. Device as claimed in at least one of the preceding claims, **characterized in that** the sealing means (15) is made from a plastic.

9. Device as claimed in Claim 8, **characterized in that** the sealing means (15) is made from an elastomer or a thermoplastic.

10. Device as claimed in at least one of the preceding claims, **characterized in that** in an assembled state of the components (14, 16) the sealing means (15) has an asymmetrical cross-section (Q).

11. Device as claimed in at least one of the preceding claims, **characterized in that** at least one of the components (14, 16) has at least one cylindrical raised area (35b) for connection to the other component (16, 14).

12. Device as claimed in at least one of the preceding claims, **characterized in that** the first component is a mould support and the second component is a blow mould part.

13. Device as claimed in at least one of the preceding claims, **characterized in that** delivery means for delivering a temperature control medium are disposed within a section surrounded by the sealing means (15).

## Revendications

1. Dispositif (1) de transformation de préformes en matière plastique (10) en récipients en matière plastique (10a), avec une pluralité de stations de transformation (8) disposées sur un support (2) mobile, lesdites stations de transformation (8) comportant des moules de soufflage (4) respectifs, à l'intérieur desquels les préformes en matière plastique (10) sont transformables en récipients en matière plastique (10a) en étant soumises à un agent fluide, et des supports (6) de moule de soufflage pour le maintien desdits moules de soufflage (4), lesdits supports (6) de moule de soufflage comportant au moins deux parties (6a) de support de moule de soufflage mobiles l'une par rapport à l'autre pour l'ouverture et la fermeture des moules de soufflage (4), avec un compartiment stérile (20) isolé de l'environnement (U) par au moins une paroi (18), lequel entoure les différentes stations de transformation (8) au moins en partie, si bien que les stations de transformation (8) sont déplaçables à l'intérieur dudit compartiment stérile (20), et avec au moins un dispositif d'alimentation (60) pour soumettre à un agent de stérilisation fluide au moins une zone des stations de transformation (8) déplaçables à l'intérieur du compartiment stérile (20),
**caractérisé en ce qu'**
au moins une station de transformation (8) comprend deux pièces (14, 16) fixées de manière permanente l'une contre l'autre dans un mode de service de travail, et **en ce qu'**un dispositif de joint (15) élastique est disposé entre ces deux pièces, ledit dispositif de joint (15) comblant et/ou obturant un interstice formé entre lesdites pièces (14, 16) de telle manière que ledit dispositif de joint (15) peut être directement soumis à l'agent de stérilisation.

2. Dispositif selon la revendication 1,
**caractérisé en ce que**
le dispositif de joint (15) est réalisé comme dispositif de joint (15) périphérique.

3. Dispositif selon la revendication 2,
**caractérisé en ce que**
le dispositif de joint (15) est réalisé sous une forme annulaire.

4. Dispositif (1) selon au moins une des revendications précédentes, avec une pluralité de dispositifs de joint (15) pouvant être directement soumis à l'agent de stérilisation.

5. Dispositif selon au moins une des revendications précédentes,
**caractérisé en ce qu'**
au moins une des pièces (14) comporte un évidement de réception (80) pour le logement du dispositif de joint (15).

6. Dispositif selon la revendication 5,
**caractérisé en ce que**
l'évidement de réception (80) est prévu de façon périphérique.

7. Dispositif selon la revendication 5,
**caractérisé en ce que**
l'évidement de réception (80) présente des parois de délimitation (82, 84), lesdites parois de délimitation ayant des hauteurs (h1, h2) différentes par rapport à un fond (87) d'évidement de réception.

8. Dispositif selon au moins une des revendications précédentes,
**caractérisé en ce que**
le dispositif de joint (15) est en matière plastique.

9. Dispositif selon la revendication 8,
**caractérisé en ce que**
le dispositif de joint (15) est en élastomère ou en matière thermoplastique.

10. Dispositif selon au moins une des revendications précédentes,
**caractérisé en ce que**
le dispositif de joint (15) présente une section transversale (Q) asymétrique dans un état de montage des pièces (14, 16).

11. Dispositif selon au moins une des revendications précédentes,
**caractérisé en ce qu'**
au moins une des pièces (14, 16) présente au moins une saillie (35b) cylindrique pour la connexion à l'autre pièce (16, 14).

12. Dispositif selon au moins une des revendications précédentes,
**caractérisé en ce que**
la première pièce est un support de moule et la deuxième pièce une partie de support de moule.

13. Dispositif selon au moins une des revendications précédentes,
**caractérisé en ce que**
des dispositifs d'alimentation pour l'amenée d'un fluide régulateur de température sont disposés à l'intérieur d'une section entourée par le dispositif de joint (15).
